# EUROPÄISCHE PATENTSCHRIFT

(11) **EP 3 344 480 B1**
(45) Veröffentlichungstag und Bekanntmachung des Hinweises auf die Patenterteilung: **16.06.2021**
(21) Anmeldenummer: 16788010.3
(22) Anmeldetag: 01.09.2016
(51) Int. Cl.: B60J 5/06

(54) **PLANENAUFHÄNGVORRICHTUNG**
TARPAULIN SUSPENSION DEVICE
DISPOSITIF DE SUSPENSION DE BÂCHE

(30) Priorität: 01.09.2015 DE 202015006044 U
(43) Veröffentlichungstag der Anmeldung: 11.07.2018
(73) Patentinhaber: European Trailer Systems GmbH, 47441 Moers (DE)
(72) Erfinder: BIESENBRUCK, Volker, 46459 Rees (DE); FRENTZEN, Frank, 41749 Viersen (DE)
(74) Vertreter: Sparing, Rolf Klaus
(86) Internationale Anmeldenummer: PCT/DE2016/100400
(87) Internationale Veröffentlichungsnummer: WO 2017/036463

(56) Entgegenhaltungen:
- EP-A1- 2 708 395
- WO-A1-2009/003218
- DE-U1-202012 003 235
- DE-U1-202012 003 235
- DE-U1-202014 000 805
- DE-U1-202014 000 805

## Beschreibung

Die Erfindung betrifft eine Planenaufhängvorrichtung mit einer Basisplatte, an der wenigstens eine Anschlusseinrichtung für eine Plane und wenigstens zwei Tragrollen angeordnet sind, die entlang eines Längsträgers eines Verdeckgestells für einen Planenaufbau verlagerbar sind.

EP 0 882 614 B1 beschreibt eine Planenaufhängvorrichtung mit einer planaren Basisplatte, an der senkrecht zu der Ebene der Basisplatte zwei Tragrollen gelagert sind, die sich in einem Längsträger abstützen, in dem eine schmale untere Lauffläche für den Umfang der Tragrolle vorgesehen ist, wobei die Tragrollen auf der Lauffläche um einen Winkel verschwenkt werden können, der durch zwei Begrenzungen in einem oberen Bereich der die Tragrollen aufnehmenden Kammer, in der auch die Lauffläche angeordnet ist, begrenzt ist. Hierbei ist die Plane direkt an die Basisplatte angebunden.

EP 2 371 595 A1 beschreibt eine Planenaufhängvorrichtung mit einer Basisplatte, an der senkrecht zwei Tragrollen mit jeweils einem Kunststofflaufring angeschlossen sind, bei der ein Führungsbereich der Basisplatte oberhalb des Bereichs der Tragrollen um ca. 90° umgebogen ist und eine Führungsrolle aufweist, die in einer gesonderten Kammer des Längsträgers abgestützt ist. Die Basisplatte weist ein im Wesentlichen zu der Verbindungslinie der beiden Achsen der Tragrolle paralleles Langloch mit abgerundeten Enden auf, durch das ein Gurt, der mit der Seitenplane vernäht ist, hindurchgeführt werden kann. Ein unterhalb der Befestigung der Tragrollen an der Basisplatte angrenzender Bereich der Basisplatte mit dem Langloch ist von dem Längsträger fort abgebogen. Die Planenaufhängvorrichtung lässt nur ein geringes Verschwenken der Seitenplane zu, und ist aufwendig in der Herstellung.

DE 20 2009 002 621 U1 zeigt eine Planenaufhängvorrichtung, die eine Basisplatte aus Stahl aufweist, an der senkrecht zu der Ebene der Basisplatte zwei Tragrollen gelagert sind, die sich in einem Längsträger abstützen. Die Basisplatte weist ein im Wesentlichen zu der Verbindungslinie der beiden Achsen der Tragrolle paralleles Langloch mit abgerundeten Enden auf, durch das ein Gurt, der mit der Seitenplane vernäht ist, hindurchgeführt werden kann. In dieses Langloch ist eine Momentenabstützung aus Kunststoff eingeclipst, die eine Anlagefläche für das Entlanggleiten an dem Längsträger aufweist. Nachteilig bei dieser Planenaufhängvorrichtung ist zum einen, dass es zu unerwünschtem Schleifen der Basisplatte auf Teilen des Längsträgers kommen kann, wenn die Plane unter ihrer eigenen Last ein Schwenkmoment um die Auflagefläche der Tragrollen einleitet und damit die Seitenplane insgesamt zum Nutzfahrzeugaufbau hin verschwenkt. Die durch Vernietung an die Basisplatte angeschlossenen Tragrollen sind mit einem Laufring aus Kunststoff umgeben, der schnell verschleißt, wobei eine Auswechslung einer Planenaufhängvorrichtung bei defekter Tragrolle ein zeitaufwendiges Lösen des Gurts von der Plane erfordert. Wegen der Anbringung der Momentenabstützung in dem Langloch, in dem auch der Gurt angeordnet ist, verschleißt der Gurt schnell und es kommt auch zu unbeabsichtigtem Abscheren der Clipsverbindung durch Manipulation der Seitenplane.

DE 20 2014 000 805 U1 beschreibt eine Planenaufhängvorrichtung, bei der eine Basisplatte eine Anschlusseinrichtung für eine Plane und zwei Tragrollen umfasst. Eine Führungsrolle ist über einen an die Basisplatte angeschlossenen Federbügel oder eine an die Basisplatte anclipsbaren Kunststoffspange federnd über die die Tragrollen tragenden Seite der Basisplatte innerhalb der als Durchbrechung ausgebildeten Anschlusseinrichtung für die Plane angeordnet. Nachteilig an der bekannten Planenaufhängvorrichtung ist neben der aufwändigen Herstellung vor allem der Umstand, dass die Basisplatte bei Ziehen der Seitenplane um die in etwa zentral angeordnete Führungsrolle verkippt wird, wodurch es zu einem Schleifen und Einarbeiten der Basisplatte in den Längsträger kommt. Weiterhin ist der Spielraum für den Anschluss der Plane recht groß.

DE 20 2012 003 235 U1 zeigt eine als langgestreckte Runge ausgebildete Vorrichtung, in die eine Plane eines Verdeckgestells angeschlossen werden kann, wobei die Runge eine oberen Schlitten und einen unteren Schlitten aufweist, wobei der obere Schlitte eine Tragrolle und eine Führungsrolle umfasst, die jeweils senkrecht zu einem Schenkel einer winkelförmig gefalteten Basisplatte drehbar angeschlossen sind, wobei der obere Schlitten entlang eines Längsträgers eines Verdeckgestells für einen Planenaufbau verlagerbar ist. Der untere Schlitten weist ein umgefaltetes Ende mit einem nach oben weisenden Rand auf, der sich von unten gegen ein Profilgegenstück einer Ladepritsche anlegen kann.

WO 2009 003 218 A1 beschreibt eine Planenaufhängvorrichtung sowie einen Planenaufbau mit einer entlang eines Längsträgers verlagerbaren Gardine. Die Planenaufhängvorrichtung umfasst einen Träger, an dem jeweils zwei Paare von Tragrollen an entsprechenden Plattenabschnitten des Trägers in der Weise angeschlossen sind, dass eine Achse der Tragrollen normal zu dem jeweiligen Plattenabschnitt angeordnet ist. In dem Bereich zwischen den beiden Paaren von Tragrollen ist der Träger als zylindrisches Rohr ausgebildet, in dem ein Schaft drehbar aufgenommen ist. Der Schaft verlängert sich wahlweise zu einem hakenförmigen, gekrümmten Ende oder zu einem gabelförmigen, geraden Ende. An den Schaft ist jeweils schwenkbar eine Platte angeordnet, die wiederum Durchbrechungen für den Anschluss von einer Plane zugeordneten Streifen ermöglicht. Am Umfang des Schaftes sind - jeweils benachbart zu den Stirnseiten des zylindrischen Rohrs - drehbar eine obere Führungsrolle und eine untere Führungsrolle angeschlossen.

DE 10 2013 201 003 A1 und DE 10 2013 201 005 A1 beschreiben eine Planenaufhängvorrichtung, umfassend eine Basisplatte, an der eine Anschlusseinrichtung für eine Plane in Form eines Langlochs ausgebildet ist, wobei die Basisplatte zwei Tragrollen aufweist, deren Achsen normal zu der Ebene der Basisplatte verlaufen. In einer zentralen Partie ist ein Teil der Basisplatte freigestellt und um 90° umgebogen, wobei eine Führungsrolle in einer Ebene unterhalb der Tragrollen um eine senkrecht zu der Freistellung der Basisplatte angeordnete Achse vorgesehen ist. Die Führungsrolle weist hierbei einen kleineren Durchmesser auf als die beiden Tragrollen.

EP 2 708 395 A1 beschreibt eine Planenaufhängvorrichtung für eine Seitenplane eines Fahrzeugaufbaus, bei dem die Plane an eine Führungsstange angeschlossen wird, die wiederum mit der Basisplatte der Planenaufhängvorrichtung verbunden wird. An der Basisplatte sind zwei Tragrollen quer zu der Plattenebene angeschlossen, die entlang eines Längsträgers eines Verdeckgestells des Planenaufbaus verlagerbar sind. Ferner sind an der Basisplatte drei Führungsrollen angeschlossen, die senkrecht zu der Orientierung der Tragrollen angeordnet sind und die sich an einer seitlichen Führungsbahn des Längsträgers abstützen. Eine erste Führungsrolle ist hierbei zwischen den beiden Tragrollen an einer abgefalteten Abstellung der Basisplatte und ist senkrecht zu deren Ebene angeschlossen, während die beiden weiteren Führungsrollen an einer Position in etwa unterhalb der Tragrollen ebenfalls an Abfaltungen der Basisplatte angeschlossen sind. Da sowohl die Tragrollen als auch die Führungsrollen die Basisplatte bzw. deren Abfaltungen durchsetzen, ist die sich ergebende Planenaufhängvorrichtung sehr raumgreifend und erfordert eine große Basisplatte.

DE 10 2013 014 629 A1 beschreibt eine Planenaufhängvorrichtung für eine Seitenwand mit einer Basisplatte, an der eine Anschlusseinrichtung für eine Plane und zwei Tragrollen senkrecht zu der Ebene der Basisplatte angeschlossen sind. Ein weiterer Plattenkörper ist mit der Basisplatte verbunden und weist in ca. 45° zu den Tragrollen der Basisplatte geneigte Führungsrollen auf, die in etwa dieselben Abmessungen wie die Tragrollen aufweisen, wobei der Plattenkörper die Basisplatte umgreift. Auch die Führungsrollen sind senkrecht zu einer um 45° abgewinkelten Fläche des Plattenkörpers angeschlossen. Die Planenaufhängvorrichtung, die aus Basisplatte und Plattenkörper zusammengesetzt ist, ist recht schwer und platzraubend.

Die bekannten Planenaufhängvorrichtungen mit einer Führungsrolle basieren meist auf dem Prinzip, dass die Basisplatte zumindest einmal gefaltet wird und dann die Führungsrolle senkrecht zu dem gefalteten Teil der Basisplatte an dieser gelagert werden. Hierdurch sind die Planenaufhängvorrichtungen voluminös und teuer.

Es ist die Aufgabe der Erfindung, eine verbesserte Planenaufhängvorrichtung anzugeben, die einfach und zuverlässig zu bedienen ist.

Diese Aufgabe wird durch eine Planenaufhängvorrichtung mit den Merkmalen eines unabhängigen Anspruchs gelöst.

Gemäß einem Aspekt der Erfindung weist eine Planenaufhängvorrichtung eine Basisplatte auf, an der wenigstens eine Anschlusseinrichtung für eine Plane und wenigstens zwei Tragrollen angeordnet sind, die entlang eines Längsträgers eines Verdeckgestells für einen Planenaufbau verlagerbar sind. Weiter ist hierbei zumindest eine zu den Tragrollen senkrechte Führungsrolle an einer Schmalseite der Basisplatte gelagert. Die Lagerung an bzw. in der Schmalseite der Basisplatte vermeidet vorteilhaft, dass die Basisplatte abgewinkelt werden muss, um einen flächigen Abschnitt bereitzustellen, in dem die Führungsrolle gelagert werden kann. Hierdurch ist es möglich, eine Basisplatte mit weitgehend planarem Verlauf für eine Planenaufhängvorrichtung vorzusehen, die sich leicht durch Stanzen herstellen lässt. Während die Tragrollen in einer Ebene parallel zu der Basisplatte angeordnet sind, ist hierzu senkrecht die zumindest eine Führungsrolle insbesondere parallel zu der Schmalseite bzw. dem Rand der Basisplatte angeordnet. Die Planenaufhängvorrichtung ist äußerst kompakt und lässt sich dadurch leicht stapeln oder versenden. Ferner kann die Basisplatte so dimensioniert werden, dass die Schmalseite in einer Höhe vorgesehen ist, die ein Abrollen der Führungsrolle an dem Längsträger ermöglicht.

Gemäß einer bevorzugten Ausgestaltung ist vorgesehen, dass die zumindest eine Führungsrolle einseitig in der Schmalseite der Basisplatte gelagert ist. Hierzu wird beispielweise ein die Führungsrolle lagernder Schaft in die Schmalseite der Basisplatte eingesetzt, wobei der entsprechende Schaft auch über die Begrenzung der Schmalseite vorstehen kann und sich vorzugsweise auch an den Flachseiten der Basisplatte verklammern oder abstützten kann. Alternativ kann die zumindest eine Führungsrolle auch beidseitig in je einer Schmalseite der Basisplatte gelagert sein, nämlich indem ein durchgehender Lagerzapfen beidendig in jeweils einem Ende in der Schmalseite der Basisplatte aufgenommen ist, so dass eine verbesserte Abstützung der zumindest einen Führungsrolle an der Basisplatte erreicht wird, wohingegen der Aufwand des Anschlusses der zumindest einen Führungsrolle an die Basisplatte erhöht ist.

Zweckmäßigerweise ist die zumindest eine Führungsrolle an der den Tragrollen gegenüberliegenden Schmalseite der Basisplatte gelagert. Hierdurch kann vorteilhaft die Anordnung der Führungsrolle im Bereich der Anschlusseinrichtung für eine Plane vorgesehen sein, und ein vergleichsweise großer Abstand zu den Tragrollen, um deren Unterseite herum die Planenaufhängvorrichtung verschwenkt werden kann, wird hierdurch erreicht. Hierdurch ist insbesondere auch ermöglicht, dass die Tragrollen bei einer Verschwenkung der Planenaufhängvorrichtung zu dem Längsträger hin als erstes mit dem Längsträger in Kontakt gelangen und entlang von diesem abrollen, so dass ein Schleifen der Planenaufhängvorrichtung oder von Teilen der Plane entlang des Längsträgers wirksam vermieden wird.

Zweckmäßigerweise steht die zumindest eine Führungsrolle beiderseits der Basisplatte radial vor. Hierdurch ist es möglich, den Lagerzapfen der Führungsrolle in etwa zentrisch in der Schmalseite der Basisplatte anzuordnen und die Führungsrolle in etwa mit der Mittelebene der Schmalseite auszurichten. Alternativ kann die Führungsrolle aber auch exzentrisch auf dem Lagerzapfen derart gelagert sein, dass ein größerer Teil der Führungsrolle auf der Seite der Tragrollen über die Basisplatte vorsteht als auf der gegenüberliegenden Seite.

Die zumindest eine Führungsrolle stützt sich gegen eine Führungsbahn des Längsträgers ab, die im Wesentlichen flach ausgebildet ist. Durch die Rollbewegung der Führungsrolle um ihr Lager wird der längsträger praktisch nicht verschlissen, so dass der von der Planenaufhängvorrichtung eingehaltene Abstand zu dem Verdeckgestell nahezu konstant bleibt.

Vorzugsweise ist die zumindest eine Führungsrolle benachbart zu der Anschlusseinrichtung für die Plane angeordnet, so dass in die Planenaufhängvorrichtung und deren Basisplatte eingeleitete Kräfte von der Führungsrolle aufgenommen werden und damit vorteilhaft vermieden wird, dass die in der Anschlusseinrichtung angeschlossene Plane gegen den Längsträger scheuert und dadurch verschlissen oder eingerissen wird. Vorzugsweise ist die Führungsrolle hierbei nicht in der Anschlusseinrichtung angeordnet, sondern außerhalb von dieser.

Gemäß einer bevorzugten Ausführung ist vorgesehen, dass die zumindest eine Führungsrolle an dem nach unten weisenden Ende der Basisplatte angeordnet ist. Hierbei muss die Führungsrolle nicht an dem untersten Ende angeordnet sein, sondern es reicht aus, dass dies an einem Abschnitt erfolgt, der nach unten weist, so dass beispielsweise auch Rücksprünge oder Ausnehmungen in der Basisplatte hierfür genutzt werden können. Daher weist die Basisplatte vorzugsweise eine Aussparung auf, in der die zumindest eine Führungsrolle angeordnet ist, wobei die Aussparung vorzugsweise in einer Ecke der Basisplatte vorgesehen ist. Hierdurch ist der Zugang zu der Schmalseite zum Einsetzen eines Lagerzapfens weitgehend frei, und die Herstellung der Planenaufhängvorrichtung vergleichsweise einfach.

Die zumindest eine Führungsrolle ist zweckmäßigerweise senkrecht zu der Ebene der Tragrollen angeordnet. Es ist aber möglich, die zumindest eine Führungsrolle auch ein wenig zu dieser senkrechten Anordnung zu verkippen oder sogar nachgiebig auszubilden, um die Planenaufhängvorrichtung an die örtlichen Gegebenheiten anzupassen.

Die zumindest eine Führungsrolle ist zweckmäßigerweise senkrecht zu der Ebene der Basisplatte angeordnet. Es ist aber möglich, die zumindest eine Führungsrolle auch ein wenig zu dieser senkrechten Anordnung geneigt oder sogar ganz parallel anzuordnen, wenn der Lagerzapfen entsprechend konfiguriert ist.

Die zumindest eine Führungsrolle ist zweckmäßigerweise auf einem Lagerzapfen gelagert, der an der Basisplatte festgelegt ist. Hierbei kann der Lagerzapfen beispielsweise in eine Nut oder in einen Schlitz, der in den Rand bzw. die Schmalseite der Basisplatte eingearbeitet ist, eingepresst sein, alternativ aber auch mit der Basisplatte verschweißt sein. Es ist auch möglich, in die Schmalseite der Basisplatte ein Loch zu bohren, in das ein zylindrischer Vorsprung des Lagerzapfens eingepresst wird. Alternativ kann anstelle des Einpressens auch ein Sicherungsbolzen durch den Lagerzapfen geschlagen werden, der diesen mit der Basisplatte verbindet bzw. diesen an die Basisplatte festlegt. Weiterhin ist es möglich, dass der Lagerzapfen Teil der Basisplatte ist, also einteilig mit der Basisplatte ausgebildet ist. So kann der Lagerzapfen beispielsweise als vorstehender Abschnitt des Randes der Basisplatte ausgebildet sein, der anschließend umfangsmäßig verrundet werden kann. Vor oder nach dem Verrunden kann dann der Zapfen noch ausgerichtet, z.B. verbogen werden. Das Verschweißen des Lagerzapfens an die Basisplatte weist den Vorteil auf, dass der Lagerzapfen mit der Basisplatte zu einem Teil wird und insbesondere eine Unterlegscheibe oder dergleichen für die eigentliche Führungsrolle, die auch über die Schmalseite der Basisplatte vorstehen kann, an die Basisplatte angeschlossen wird.

Der drehbare Teil der Führungsrolle ist zweckmäßigerweise als auf dem Lagerzapfen gelagerte Lochscheibe aus Kunststoff, ähnlich einem Reifen aus Vollmaterial, ausgeführt, der zum Beispiel durch einen Sprengring oder Splint gesichert ist. Eine gesonderte Lagerbuchse ist bei dieser Materialpaarung nicht unbedingt erforderlich.

Gemäß eines besonders bevorzugten Merkmals ist vorgesehen, dass zwei Führungsrollen an der Basisplatte angeordnet sind, wobei jeder Hälfte der Basisplatte eine eigene Führungsrolle zugeordnet ist. Hierdurch wird vorteilhaft erreicht, dass jede der beiden Führungsrollen die Basisplatte und damit die Planenaufhängvorrichtung gegen den Längsträger abstützt, so dass, wenn an der Plane gezogen wird, es praktisch nicht zu einem Verschwenken der Basisplatte um eine der beiden Führungsrollen kommt, da beide Führungsrollen an dem Längsträger abrollen. Zweckmäßigerweise sind die zwei Führungsrollen hierzu möglichst weit außen in Bezug auf die Verlagerungsrichtung der Planenaufhängvorrichtung angeordnet, um nur ein kleines Kippmoment zu ermöglichen. Es ist möglich, mehr als genau zwei Führungsrollen vorzusehen, beispielweise drei oder vier. Die Führungsrollen sind zweckmäßig nahe an den in Bewegungsrichtung weisenden Stirnseiten der Basisplatte angeordnet, so dass selbst bei Verkippen der Basisplatte oder bei Anheben der Tragrollen aus der zugehörigen Bahn des Längsträgers die Fürhrungsrollen als erste in Kontakt mit dem Längsträger gelangen.

Die zwei Führungsrollen sind bezüglich einer die Basisplatte zwischen den beiden Tragrollen halbierenden Ebene zweckmäßigerweise symmetrisch an der Basisplatte angeordnet, damit das Verhalten der Planenaufhängvorrichtung bei Öffnen und Schließen in etwa dasselbe ist. Es ist alternativ möglich, mehr als zwei Führungsrollen an der Basisplatte anzuordnen, wenn beispielsweise weitere Führungsfunktionen erwünscht sind.

Die Lagerung der zwei Führungsrollen, also derjenige Ort, an dem der Lagerzapfen angeschlossen ist, ist zweckmäßigerweise jeweils in einem Bereich der Basisplatte angeordnet, der außerhalb des die Tragrollen umschreibenden Bereichs liegt. Hierdurch wird erreicht, dass selbst wenn die Planenaufhängvorrichtung insgesamt asymmetrisch belastet wird, zumindest eine der beiden Führungsrollen mit dem Längsträger in Kontakt steht oder als erstes in Kontakt gelangt.

Gemäß einer bevorzugten Ausgestaltung ist vorgesehen, dass der Umfang der Führungsrollen geringfügig gegenüber den Stirnseiten der Basisplatte, die in die Verlagerungsrichtung der Planenaufhängvorrichtung weist, zurücksteht. Hierdurch wird vermieden, dass bei Zusammenschieben einer Plane die Rollen benachbarter Planenaufhängvorrichtungen sich an den Stirnseiten berühren und ggf. gegenseitig blockieren. Insbesondere wird hierdurch vermieden, dass bei ruckartigem Aufziehen der Seitenplane die Führungsrollen bzw. deren Lagerung beschädigt werden.

Vorzugsweise ist der Abstand der Tragrollen von der Basisplatte größer als der Radius der Führungsrollen. Hierdurch wird erreicht, dass die Tragrollen in einer entsprechenden Auflage des Längsträgers eingesetzt werden können, und die Führungsrollen sich gegen eine nach außen weisende Fläche des Längsträgers abstützen können, ohne dass die Basisplatte hierbei verkantet. Vielmehr wird die Basisplatte wesentlich senkrecht gehalten und von der Kontaktlinie der Tragrollen mit der Auflage und der Kontaktlinie der Führungsrollen der nach außen weisenden Wandung vorteilhaft zentriert. Insbesondere kann die Planenaufhängvorrichtung um die Linie, die durch die Unterseite der Tragrollen und die Auflage gebildet ist, verschwenkt werden, wodurch die Führungsrollen außer Eingriff mit der Wandung des Längsträgers gelangen können, beispielsweise wenn die Plane betätigt wird.

Gemäß einer Ausführung ist vorgesehen, dass die Tragrollen einen Laufring mit einer Umfangsfläche aus Stahl für die Abstützung an einem Längsträger aufweisen. Vorzugsweise ist der Laufring jedoch als aufgebrachter Kunststofflaufring ausgebildet, wodurch der Längsträger bei der Verlagerung der Plane und der Planenaufhängvorrichtung praktisch nicht verschlissen wird.

Vorzugsweise ist der Laufring an einem äußeren Lagerring eines Wälzlagers, insbesondere eine Kugellagers, angeschlossen. Alternativ kann der Laufring aber auch als äußerer Lagerring des Wälzlagers ausgebildet sein, wodurch die Arbeit des Fügens von äußerem Lagerring und Laufring entfällt.

Vorzugsweise weist die Umfangsfläche des Laufrings eine im Querschnitt halbkreisförmige radiale Begrenzung auf, deren Radius entsprechend klein, also etwa bei Hälfte der Dicke der Tragrolle, gewählt ist. Alternativ kann die Umfangsfläche des Laufrings aber auch eine im Querschnitt halbkreisförmige radiale Begrenzung mit einem großen Radius aufweisen, die an den Ecken abgerundet ist, wodurch die Tragrolle im Bereich ihres Scheitels eine sehr flache Wölbung aufweist, wodurch die Neigung, sich in die Lauffläche des Längsträgers einzugraben, verringert ist.

Vorzugsweise sind die Tragrollen über ein Wälzlager, insbesondere Kugellager, mit einem inneren Lagerring und einem äußeren Lagerring an die Basisplatte angeschlossen, wobei der innere Lagerring einen den äußeren Lagerring axial überragenden Hohlzylinderabschnitt aufweist, der ein Distanzstück zu der Basisplatte bildet. Damit kann in günstiger Weise das Wälzlager unmittelbar an die Basisplatte angeschlossen werden, ohne ein gesondertes Teil als Distanzstück vorzusehen, so dass die Verbindung der Tragrolle mit der Basisplatte vereinfacht ist und unnötige Beweglichkeit in der Baugruppe vermieden wird.

Vorzugsweise weist der Hohlzylinderabschnitt eine Stirnseite auf, die auf einer Seite der Basisplatte, die dem Längsträger zugekehrt ist, abgestützt ist. Hierdurch kann dann, wenn der innere Lagerring eine zu der Ebene der Tragrollen parallele Stirnseite aufweist, die Anordnung von Tragrollen parallel zu der Ebene desjenigen Bereichs der Basisplatte, an den die Stirnseite angelegt wird, erreicht werden. Es ist aber auch möglich, dass die Stirnseite gegenüber der Ebene der Tragrolle abgeschrägt ist, wodurch ein Anordnen der Tragrollen geneigt zu der Basisplatte erreicht werden kann.

Es ist möglich, dass der Hohlzylinderabschnitt einen zentralen Gewindeabschnitt aufweist, der mit einem Schraubenbolzen verbindbar ist. Hierdurch wird eine leicht wieder zu lösende, trotzdem mit wenig Bewegung behaftete Verbindung geschaffen. Defekte Tragrollen lassen sich hierdurch leicht austauschen.

Gemäß einer Ausführung stimmt der Innendurchmesser des Hohlzylinderabschnitts mit dem Durchmesser einer runden Bohrung in der Basisplatte, an der der Hohlzylinderabschnitt angeschlossen ist, überein, so dass beide Teile, der Hohlzylinderabschnitt und die Bohrung, von einem Schaftteil des Schraubenbolzens mit demselben Außendurchmesser durchgriffen werden können. Vorzugsweise ist jedoch die Bohrung in der Basisplatte prismatisch, insbesondere als Vierkant, ausgeführt, und der Schaftabschnitt der Schraube bzw. des Schraubenbolzens, der die Bohrung durchgreift, ist komplementär, also ebenfalls prismatisch, insbesondere als Vierkant, ausgeführt. Hierdurch wird vorteilhaft erreicht, dass der Schraubenbolzen nicht mit einem Werkzeug bei der Montage gegen Verdrehung gehalten werden muss. An den prismatischen Abschnitt schließt sich dann der zylindische Gewindeabschnitt des Schraubenbolzens an. Es ist dann nur noch ein einziges Werkzeug erforderlich, das in einen Ansatz in der von der Basisplatte abgekehrten Seite des inneren Lagerrings eingreift. Der Ansatz kann beispielsweise als Torx, Sechskant, Kreuz- oder Längsschlitz oder dergleichen ausgebildet sein.

Vorzugsweise ist vorgesehen, dass die Tragrollen jeweils über einen Schraubenbolzen an die Basisplatte angeschlossen sind, und dass der Schraubenbolzen einen Kopf und einen mit einem Außengewinde versehenen Schaft umfasst, der in das Innengewinde bzw. den inneren Gewindeabschnitt des Distanzabschnitts einschraubbar ist. Hierdurch wird der innere Lagerring der Tragrolle axial in Bezug auf die Basisplatte in einfacher Weise gesichert. Hierdurch wird vorteilhaft eine auswechselbare Anbindung der Tragrolle an die Basisplatte ermöglicht, wodurch das Ersetzen einer defekten Planenaufhängvorrichtung, die bislang das Lösen des Gurts von der Plane erforderte, in einfacher und überraschender Weise dadurch geschaffen wird, dass die Schraubverbindung für die Tragrolle gelöst wird, und eine funktionierende Tragrolle wieder an die Basisplatte angeschlossen wird. Dadurch ist es insbesondere möglich, eine defekte Planenaufhängvorrichtung schnell zu reparieren, indem eine defekte Tragrolle durch eine funktionierende Tragrolle ersetzt wird. Hierzu sind zweckmäßigerweise sowohl an den inneren Lagerring als auch an der Schraube Ansetzbereiche für ein Werkzeug vorgesehen, um diese gegensinnig auseinander schrauben zu können.

Vorzugsweise weist der innere Lagerring der Tragrolle mindestens eine doppelt so große axiale Erstreckung auf wie der äußere Lagerring in der Tragrolle, so dass der innere Lagerring zugleich als Distanzstück einsetzbar ist. Alternativ kann zwischen dem Lagerring und der Basisplatte eine gesonderte Distanzhülse vorgesehen sein, wobei der Schraubenschaft dann bis zu dem inneren Lagerring reichen soll, um diesen gegen Verdrehung zu fixierien.

Zweckmäßigerweise weisen der Laufring und ein äußerer Lagerring der Tragrolle im Wesentlichen dieselbe Dicke auf, so dass an dieser Stelle kein Verkanten und kein Sammeln von Verunreinigungen entsteht.

Die Basisplatte besteht vorzugsweise aus Stahl und ist vorzugsweise als planares Teil ausgebildet, das aus einem Blech ausgestanzt werden kann, wobei abgefaltete und/oder abgebogene Bereiche anschließend leicht herzustellen sind. Es ist möglich, die Basisplatte entlang einer horizontalen Linie noch abzubiegen, so dass ein oberer, planarer Abschnitt und ein im Winkel hierzu stehender unterer, ebenfalls planarer Abschnitt entsteht. Die Biegelinie verläuft vorzugsweise nahe der horizontalen Mittellinie der als Langloch ausgebildeten Anschlusseinrichtung.

Die Planenaufhängvorrichtung lässt sich besonders zweckmäßig verwenden zum verschiebbaren und abschwenkbaren Aufhängen einer Seitenplane eines Nutzfahrzeugaufbaus.

Die Planenaufhängvorrichtung lässt sich weiter besonders zweckmäßig verwenden zum abschwenkbaren Aufhängen einer Seitenplane eines Planenaubaus, beispielsweise eines Nutzfahrzeugs.

Gemäß einem Aspekt der Erfindung ist eine Seitenplane eines Nutzfahrzeugaufbaus geschaffen, der sich durch wenigstens einen Gurt auszeichnet, der durch eine eine Anschlusseinrichtung für die Plane bildende Durchbrechung einer Planenaufhängvorrichtung, wie vorstehend erläutert, hindurch geführt ist und an das Planenmaterial angeschlossen ist.

Gemäß einem Aspekt der Erfindung ist ein Planenaufbau mit einem Verdeckgestell geschaffen, das einen oberen Längsträger aufweist, an dem wenigstens eine Planenaufhängvorrichtung anschließbar ist. Die Planenaufhängvorrichtung umfasst eine Basisplatte, an der wenigstens eine Anschlusseinrichtung für eine Plane und wenigstens zwei Tragrollen, die entlang eines Längsträgers des Verdeckgestells verlagerbar sind, angeordnet sind. Die Planenaufhängvorrichtung weist zumindest eine zu den Tragrollen quer orientierte, vorzugsweise senkrechte Führungsrolle auf, die an einer Schmalseite der Basisplatte angeordnet bzw. gelagert ist. Durch das Anordnen der Führungsrolle in der Schmalseite bzw. in dem Rand der Basisplatte wird eine kompakte und billige, gleichwohl aber stabile Abstützung gegen den Längsträger ermöglicht, die ein geringes Spiel aufweist und einen geringen Bauraum benötigt. Es ist insbesondere nicht notwendig, den die Führungsrollen lagernden Bereich der Basisplatte gegenüber einem anderen Bereich der Basisplatte umzubiegen.

Die Basisplatte ist als Plattenkörper ausgebildet und weist somit in seiner einfachsten, nahezu zweidimensonalen Konfiguration zwei planare Seiten oder Flächen auf, deren Abstand die Dicke der Platte definiert. In dieser Konfiguration der Basisplatte umfasst die Schmalseite den Rand der Basisplatte mit der genannten Dicke, nicht jedoch die beiden planaren Seiten. Ferner umfasst die Schmalseite auch die Ränder von aus der Basisplatte ausgeschnittenen Teilen der Basisplatte. Bei gebogenen Basisplatten oder gebogenen Teilen von Basisplatten finden sind dann die entsprechenden Seiten oder Flächen einerseits und Ränder andererseits ebenfalls wieder. Die Planenaufhängvorrichtung zeichnet sich dadurch aus, dass zumindest eine Rolle, in der Regel eine Führungsrolle, nicht senkrecht zu der Seite oder Fläche gelagert ist, sondern senkrecht zu der Schmalseite oder dem Rand und damit zu der Plattenebene. Hierdurch kann die entsprechend gelagerte Rolle in einer Ebene senkrecht zu der Plattenebene drehen. Es ist daher zu verstehen, dass die Schmalseite nicht größer als die Dicke des Plattenkörpers ist.

Weitere Vorteile, Merkmale, Eigenschaften und Ausführungen der Erfindung ergeben sich aus der Beschreibung bevorzugter Ausführungsbeispiele sowie aus den abhängigen Ansprüchen.

Die Erfindung wird im Folgenden unter Bezugnahme auf die anliegenden Zeichnungen anhand bevorzugter Ausführungsbeispiele näher erläutert.
- Fig. 1: zeigt eine Draufsicht auf ein bevorzugtes Ausführungsbeispiel einer erfindungsgemäßen Planenaufhängvorrichtung von vorne.
- Fig. 2: zeigt eine Draufsicht auf die Planenaufhängvorrichtung aus Fig. 1 von hinten.
- Fig. 3: zeigt eine Draufsicht auf die Planenaufhängvorrichtung aus Fig. 1 und 2 von oben.
- Fig. 4: zeigt eine Draufsicht auf die Planenaufhängvorrichtung aus Fig. 1 bis 3 von unten.
- Fig. 5: zeigt eine Draufsicht auf die Planenaufhängvorrichtung aus Fig. 1 bis 4 von einer Seite.
- Fig. 6: zeigt eine perspektivische Ansicht der Planenaufhängvorrichtung gemäß Fig. 1 bis 5 von vorne.
- Fig. 7: zeigt eine Draufsicht auf ein anderes bevorzugtes Ausführungsbeispiel einer erfindungsgemäßen Planenaufhängvorrichtung von einer Seite entsprechend Fig. 5.
- Fig. 8: zeigt einen vertikalen Schnitt durch die Planenaufhängvorrichtung aus Fig. 7 durch eine Tragrolle.
- Fig. 9: zeigt einen vertikalen Schnitt durch die Planenaufhängvorrichtung aus Fig. 7 durch eine Führungsrolle.
- Fig. 10: zeigt eine perspektivische Ansicht eines einen Sattelauflieger überbauenden Planenaufbaus mit Planenaufhängvorrichtungen gemäß Fig. 1 bis 6.
- Fig. 11: zeigt einen Querschnitt durch einen Längsträger des Planenaufbaus aus Fig. 10 mit einer Planenaufhängvorrichtung und dem oberen Ende einer Plane.
- Fig. 12: zeigt einen Querschnitt durch einen Längsträger eines Planenaufbaus wie in Fig. 10 mit einem weiteren Ausführungsbeispiel einer Planenaufhängvorrichtung.
- Fig. 13: zeigt einen Querschnitt durch einen Längsträger eines Planenaufbaus wie in Fig. 10 mit noch einem weiteren Ausführungsbeispiel einer Planenaufhängvorrichtung.
- Fig. 14: zeigt einen Querschnitt durch einen Längsträger eines Planenaufbaus wie in Fig. 10 mit noch einem weiteren Ausführungsbeispiel einer Planenaufhängvorrichtung.
- Fig. 15: zeigt einen Querschnitt durch einen Längsträger eines Planenaufbaus wie in Fig. 10 mit noch einem weiteren Ausführungsbeispiel einer Planenaufhängvorrichtung.

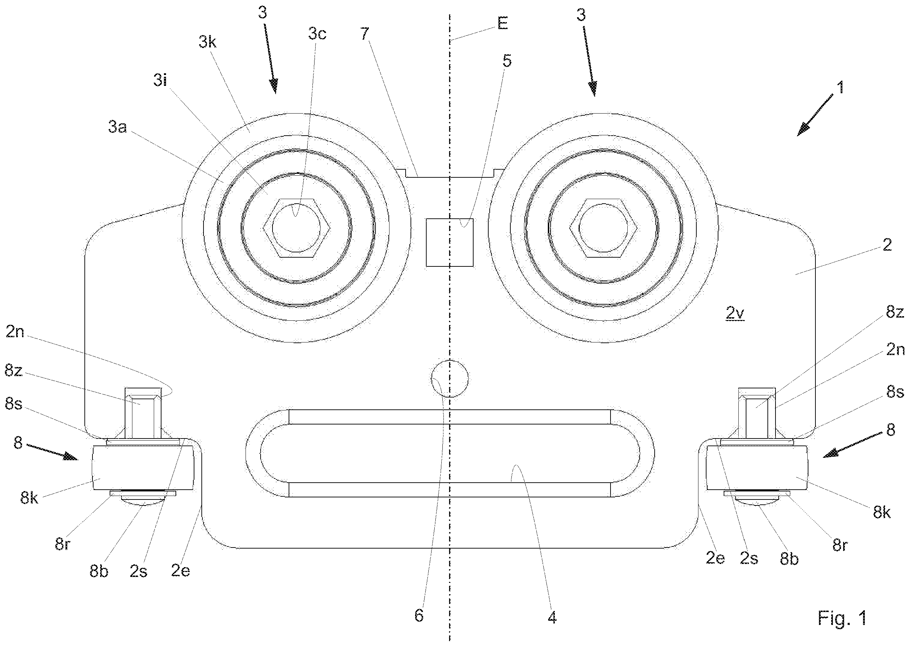

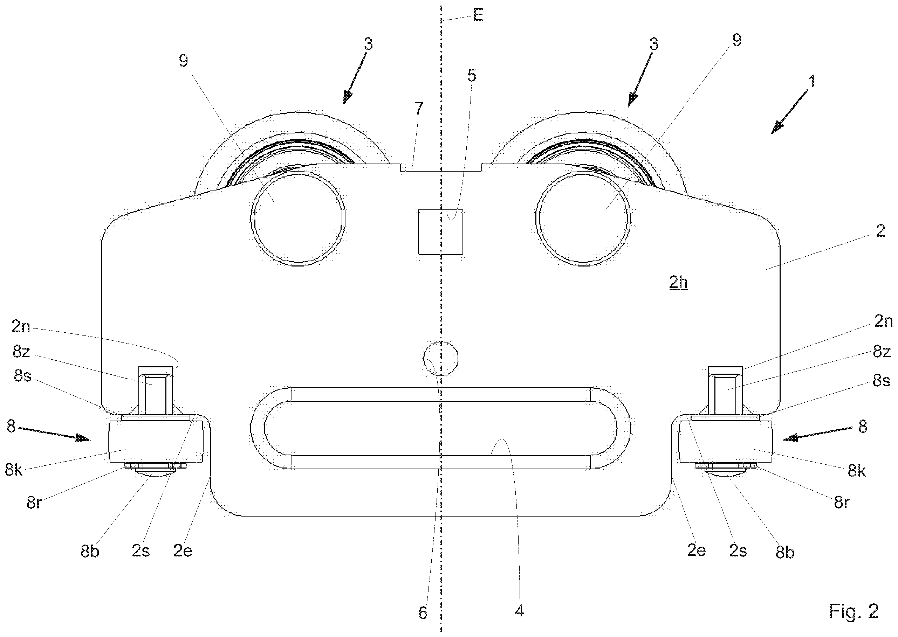

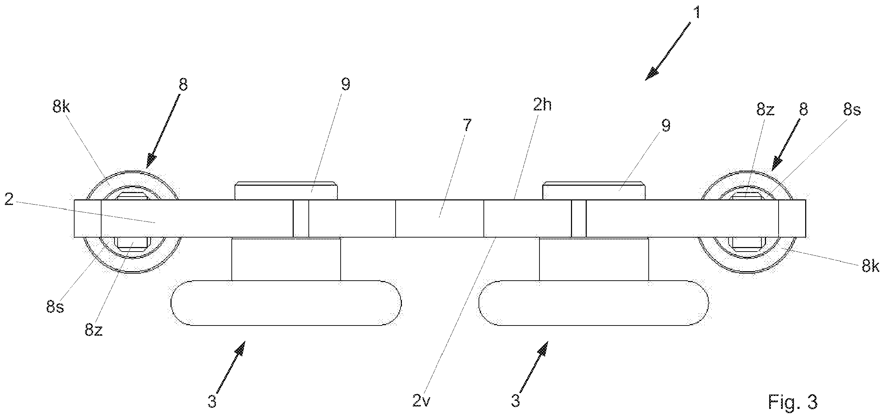

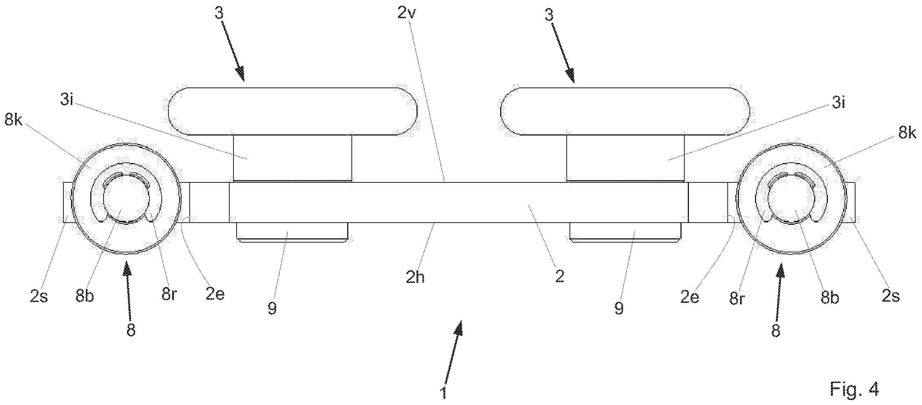

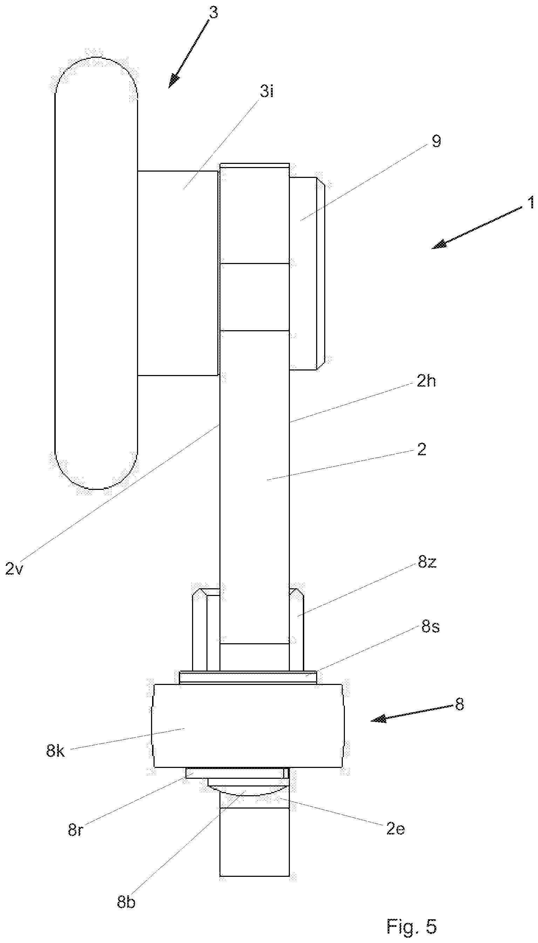

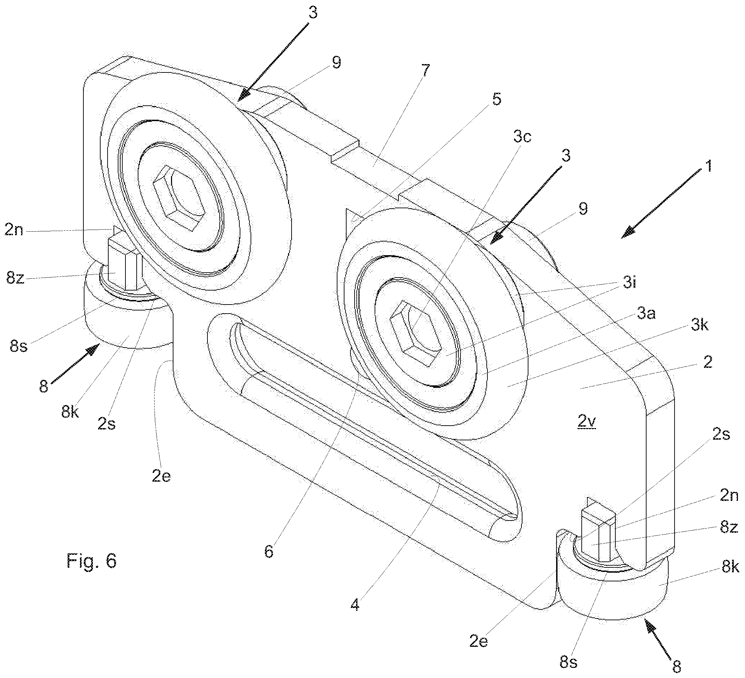

Fig. 1 bis 6 zeigen ein bevorzugtes Ausführungsbeispiel einer Planenaufhängvorrichtung 1, bei der eine aus einem Stahlblech ausgestanzte flache bzw. planare Basisplatte 2 zwei Tragrollen 3 trägt, die dazu bestimmt sind, in einer entsprechenden Laufbahn eines Längsträgers L horizontal in der Ebene der beiden Tragrollen 3 verlagert zu werden. Ferner ist in der Basisplatte eine als Langloch 4 ausgebildete Anschlusseinrichtung für eine Plane P ausgespart, deren beiden Enden abgerundet sind und die darüber hinaus zwischen einer Vorderseite 2v und einer Rückseite 2h der Basisplatte 2 nach innen abgerundete Kanten aufweist. Durch das Langloch 4 kann ein Gurt hindurchgeführt werden, der mit der als Seitenplane ausgeführten Plane P vernäht wird, so dass die Planenaufhängvorrichtung 1 insgesamt die Plane P an den Längsträger L hängt. In der Regel sind hierzu eine Mehrzahl von Planenaufhängvorrichtungen 1 an die Plane P angeschlossen und in den Längsträger eingehangen. Alternativ zu einem Gurt kommt auch ein anderes Aufhängglied in Betracht, beispielsweise wenn ein einer Runge ähnliches steifes Teil in der Plane angeordnet ist.

Man erkennt, dass weiterhin eine quadratische Durchbrechung 5 und eine runde Durchbrechung 6 in der Basisplatte ausgespart sind, die auf einer die Basisplatte 2 in eine linke Hälfte und eine rechte Hälfte halbierenden Ebene E (Fig. 1) liegen. Die Planenaufhängvorrichtung 1 ist bezüglich dieser Ebene E spiegelsymmetrisch aufgebaut.

Weiterhin erkennt man, dass mit Ausnahme einer scharfkantigen oberen Vertiefung 7 der Rand der Basisplatte 2 mit Radien an den Ecken ausgeführt ist und von allen Durchbrechungen 4, 5, 6 einen ausreichenden Materialabstand zum Rand aufweist, um Schwachstellen zu vermeiden.

Die Basisplatte 2 kann annähernd von einem auf der langen Seite liegenden Rechteck umschrieben werden, wobei in den beiden unteren Ecken des Rechtecks ein in etwa quadratisches Feld 2e jeweils ausgespart ist. An dem nach unten weisenden Rand bzw. der nach unten weisenden Schmalseite 2s der Basisplatte 2 ist jeweils eine Führungsrolle 8 gelagert, die sich beide gegen eine nach außen weisende Führungsbahn des Längsträgers L abstützen. Die beiden Führungsrollen 8 liegen in einer gemeinsamen horizontalen Ebene, die einen rechten Winkel zu der vertikalen Ebene, in der die Tragrollen 3 liegen, einnimmt.

Um die beiden Führungsrollen 8 an die Basisplatte anzuschließen, ist in der Basisplatte 2 eine die Dicke der Basisplatte 2 durchsetzende Nut 2n ausgebildet, die die untere Schmalseite 2s einschneidet. Der an die untere Schmalseite 2s angrenzende Bereich der Nut 2n weist hierbei eine nach Art einer Fase ausgebildete Einführschräge auf, um das Einsetzen eines Lagerzapfens 8z der Führungsrolle 8 zu erleichtern. Der Lagerzapfen 8z ist in die Nut 2n der Basisplatte 2 eingepresst oder eingeschweißt, wobei im Falle des Einpressens durch eine Schweißung eine weitere Sicherung gegeben sein kann. Man erkennt, dass die Dicke des Zapfens 8z größer ist als die Dicke der Basisplatte 2, so dass der Zapfen 8z die Basisplatte sowohl auf der Vorderseite 2v als auch auf der Rückseite 2h überragt. Hierbei steht der Lagerzapfen 8z auf der Vorderseite ein Stück weit mehr vor als auf der Hinterseite 2h. Die Breite des Lagerzapfens 8z ist an die Breite der Nut 2n angepasst, so dass der Lagerzapfen 8z im Wesentlichen spielfrei, möglicherweise sogar klemmend in der Nut 2n aufgenommen ist. Der Lagerzapfen 8z ist aus Stahl hergestellt, so dass eine gute Verschweißbarkeit mit dem Material der Basisplatte 2 gegeben ist. Es ist möglich, dass die Bereiche des Lagerzapfens 8z, die aus der Nut 2n vorstehen, über die Vorderseite 2v und/oder die Hinterseite 2h der Basisplatte 2 seitlich vorstehen und damit an den beiden flächigen Seiten der Basisplatte 2 eine zusätzliche Verklammerung nach Art eines Flansches oder T-Stücks erreichen. Es ist ferner möglich, in der Nut 2n Hinterschnitte oder dergleichen vorzusehen, in die Vorsprünge des Lagerzapfens 8z nach dem Einpressen eindringen können, um ein formschlüssiges Halten des Lagerzapfens 8z in der Basisplatte 2 zu erreichen, mit der Folge, dass die Montage besonders einfach ist und die beim Schweißen oder beim Einpressen möglicherweise auftretenden Toleranzen vermieden werden können.

Man erkennt, dass materialeinheitlich mit dem Lagerzapfen 8z eine nach Art einer Unterlegscheibe ausgebildete, einen Kragen bildende Scheibe 8s vorgesehen ist, von deren Mittelpunkt ein bolzenartiger zylindrischer Abschnitt 8b des Lagerzapfens 8z axial absteht, der eine aus Kunststoff hergestellte, eine zentrale Bohrung aufweisende Lochscheibe 8k der Führungsrolle aufnimmt und lagert. Die Lochscheibe 8k der Führungsrolle 8 ist dann mit einem Sprengring 8r an dem zylindrischen Lagerbolzen 8b bzw. einer darin ausgebildeten umlaufenden Nut festgelegt und gegen Bewegung entlang des Bolzens 8b gesichert. Man erkennt, dass es möglich ist, den Lagerzapfen 8z bezüglich der Basisplatte 2 so in Richtung der Nut 2n zu verschieben, dass die Führungsrolle 8 bzw. deren drehbares Teil, die Lochscheibe 8k, genau den gewünschten Abstand zu der Führungsfläche des Längsträgers L aufweist.

Es versteht sich, dass anstelle der vergleichsweise einfachen Lagerung der Führungsrolle 8 auf dem Bolzen 8b auch ein Kugellager vorgesehen sein kann, bei dem das innere Lagerteil möglicherweise einteilig mit dem Zapfen 8z ausgeführt wäre, so dass das äußere Lagerteil, beispielsweise aus Metall, den abrollenden Teil der Rolle 8 ausmachen würde. Man erkennt, dass durch das starre Anbringen der Lagerzapfen 8z an die Basisplatte 2 die Führungsrollen 8 praktisch keine Toleranz bezüglich der Basisplatte 2 aufweisen, so dass durch das Einleiten einer Kraft in die Planenaufhängvorrichtung 1, beispielsweise durch Ziehen an der Plane P, nicht die Gefahr besteht, dass die Führungsrollen 8 zurückweichen und die Basisplatte 2 sich in den Längsträger L einarbeitet. Man erkennt ferner, dass durch Entfernen des Sprengrings 8r ein Austauschen des Kunststoffteils 8k der Rolle 8 leicht ist, so dass bei Verschleiß das Verschleißteil 8k ersetzt und dann mit dem Sprengring 8r wieder an dem zylindrischen Bolzen 8b des Lagerzapfens 8z der Rolle 8 angebracht werden kann.

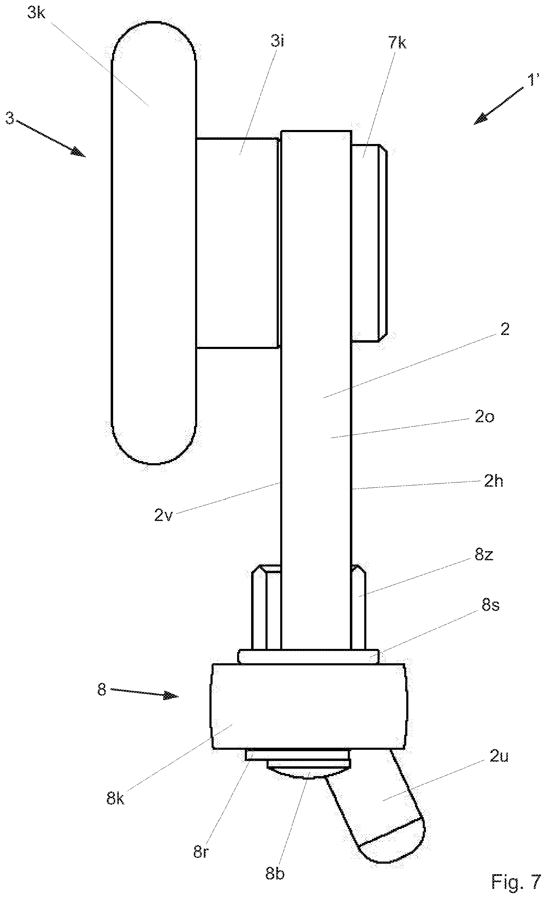

In Fig. 7 ist eine modifizierte Ausführungsform einer bevorzugten Planenaufhängvorrichtung 1' gezeigt, wobei dieselben Bezugszeichen wie bei der Ausführungsform gemäß Fig. 1 bis 6 dieselben oder strukturell vergleichbare Teile bezeichnen. Im Unterschied zu der Planenaufhängvorrichtung 1 ist die Planenaufhängvorrichtung 1' in etwa in der das Langloch 4 in zwei vertikale Hälften teilenden horizontalen Ebene um einen Winkel von etwa 25° nach hinten gebogen, so dass die untere Kante des Langlochs 4 bereits nicht mehr mit dem oberen Abschnitt 2o der Basisplatte 2 fluchtet. Hierdurch ist der untere Abschnitt 2u der Basisplatte 2 gegenüber dem oberen Abschnitt 2o der Basisplatte 2 abgewinkelt. Vorteilhaft wird dadurch erreicht, dass der durch das Langloch 4 hindurchgeführte Gurt und die hieran lastende Plane P ein Moment auf die Basisplatte 2 um die Ebene, in der die Unterseite der Tragrollen 3 auf der entsprechenden Bahn des Längsträgers L aufliegen, bewirkt, mit der Folge, dass die Führungsrollen 8 durch dieses Moment gegen die Führungsfläche des Längsträgers L angedrückt werden. Man erkennt, dass der Bereich, an den die Führungsrollen 8 angeschlossen sind, noch zu dem oberen Abschnitt 2o der Basisplatte gehört, so dass die untere Schmalseite 2s der Basisplatte 2 das senkrechte Anordnen der Führungsrolle 8 zu der Tragrolle 3 weiter ermöglicht. Es ist allerdings möglich, wenn die Basisplatte in einem höheren Bereich gefaltet werden soll, den Lagerzapfen 8z in der Nut 2n derart unter einem Winkel einzusetzen, dass die Führungsrolle 8 weiterhin in einer horizontalen Ebene liegt. Ebenso ist es möglich, das Kunststoffteil 8k der Führungsrolle 8 kegelig auszubilden, um den Winkel auszugleichen.

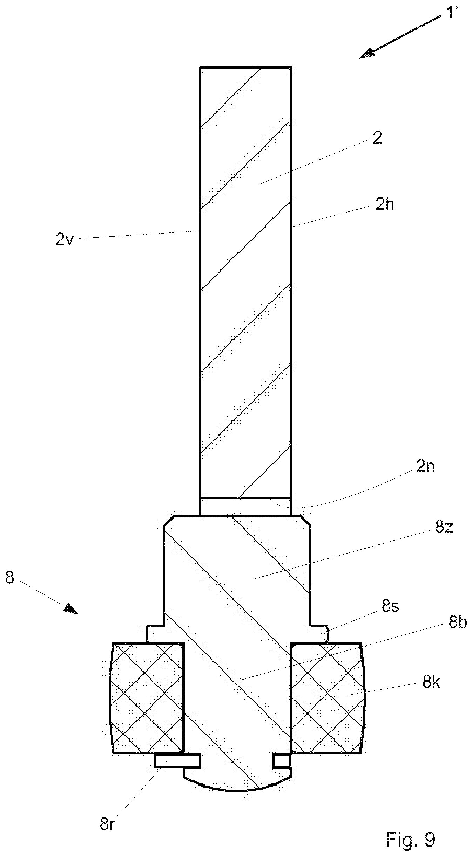

In Fig. 9 ist ein vertikaler Querschnitt durch die Rolle 8 und den zugehörigen Teil der Basisplatte 2 dargestellt (dieselbe Bauform für beide Ausführungsbeispiele), in dem man erkennt, dass der Lagerzapfen 8z, die Scheibe 8s und der Bolzen 8b als einstückiges Teil ausgeführt sind, und dass der Lagerzapfen 8z nicht vollständig den Grund der Nut 2n erreicht. Man erkennt, dass das Zentrum des Bolzens 8b gegenüber der Mittelebene der Basisplatte 2 etwas in Richtung auf die Vorderseite 2v der Basisplatte 2 versetzt ist, und dass der Durchmesser des Kunststoffteils 8k mehr als das Doppelte des Durchmessers des zylindrischen Bolzens 8b ausmacht. Ferner erkennt man, dass keine weiteren Teile für die Führungsrolle 8 benötigt werden.

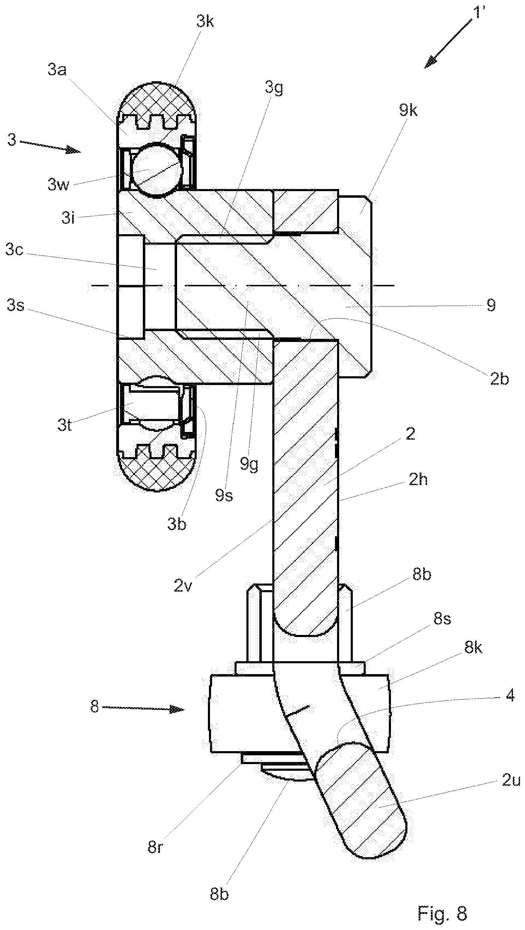

Fig. 8 zeigt einen vertikalen Querschnitt durch die Planenaufhängvorrichtung 1', die durch den Mittelpunkt einer der Tragrollen 3 hindurchgelangt. Auch hier erkennt man, dass die Führungsrolle 8 in der horizontalen Ebene bleibt, während der untere Abschnitt 2u der Basisplatte 2 einschließlich des unteren Teils des Langlochs 4 nach hinten weggebogen ist.

Ferner erkennt man, dass die Tragrolle 3 an die Basisplatte 2 angeschraubt ist (gleichermaßen in beiden Ausführungsbeispielen). Hierzu ist eine Schraube 9 mit einem Kopf 9k und einem Schraubenschaft 9s vorgesehen, die ein Außengewinde 9g aufweist, wobei der schaftseitige Flansch des Kopfes 9k sich an die hintere Seite 2h der Basisplatte 2 anlegt. Der Schaft 9s ist an den Durchmesser einer Bohrung 2b der Basisplatte angepasst und ist somit spielfrei in der Basisplatte 2 gehalten. Die Bohrung 2b ist vorliegend (nicht dargestellt) als Vierkantloch ausgebildet, während der das Vierkantloch durchsetzende Abschnitt des Schaftes 9s als komplementäres Vierkantprofil ausgeführt ist, so dass die beiden zusammengreifenden Teile eine Verdrehsicherung bilden.

Die Führungsrolle 3 umfasst einen Innenring 3i und einen Außenring 3a, auf den ein abgerundetes Kunststoffprofil 3k aufgebracht ist. Das abgerundete Profil kann allerdings auch aus Metall ausgeführt sein, wenn sich hierdurch mit dem in der Regel aus Aluminium bestehenden Material der Längsträger L bessere Laufeigenschaften ergeben. Ein Ring aus als Kugeln ausgebildeter Wälzkörper 3w erlaubt die relative Verdrehung des Außenrings 3a gegenüber dem Innenring 3i, wobei hierzu in Außenring 3a und Innenring 3i entsprechende ballige umlaufende Nuten vorgesehen sind. Die Wälzkörper 3w sind durch einen Wälzkörpertragring 3t voneinander getrennt, der zugleich die nach vorne weisende Stirnseite zwischen Außenring 3a und Innenring3i verdeckt. Auf der gegenüberliegenden Seite ist eine Blende 3b vorgesehen, die das Eindringen von Verunreinigungen und dergleichen verhindert. Man erkennt, dass der Innenring 3i mehr als doppelt so breit ist wie der Außenring 3a, und nach Art einer Hülse langgestreckt ist und eine zentrale Bohrung 3c aufweist. Die zentrale Bohrung ist zumindest abschnittsweise mit einem Innengewinde 3g ausgestattet, in das das Außengewinde 9g des Schraubenbolzens 9 einschraubbar ist.

Auf der nach vorne weisenden Seite der zentralen Bohrung 3c des Innenrings 3i ist ein Sechskant 3s angeformt, der als Ansatz bzw. Aufnahme für ein Werkzeug dient. Ebenso ist ggfs. an den nach hinten weisenden Bereich des Schraubenbolzens 9 ein weiterer Sechskant oder ein Schlitz angeformt, der ebenfalls als Aufnahme für ein Werkzeug dient, wenn Bohrung 2b und der diese durchsetzende Abschnitt des Schaftes 9s nicht als komplementäres Vierkantprofil ausgeführt sind. Hierdurch kann die Tragrolle 3 in einfacher Weise an die Basisplatte 2 angeschlossen werden, und darüber hinaus im Falle von Defekt oder Verschleiß auch leicht wieder ausgetauscht werden. Es ist sogar möglich, die Tragrolle 3, ebenso wie die Führungsrolle 8, auszutauschen, ohne hierfür die Planenaufhängvorrichtung 1, 1' von dem Gurt oder von der Plane P lösen zu müssen. Der Kopf 9k und der Innenring 3i weisen dabei einen Durchmesser auf, der es ermöglicht, die Fläche der als Vierkantloch ausgebildeten Bohrung 2b zu bedecken, damit Wasser oder Verunreinigungen nicht eindringen können.

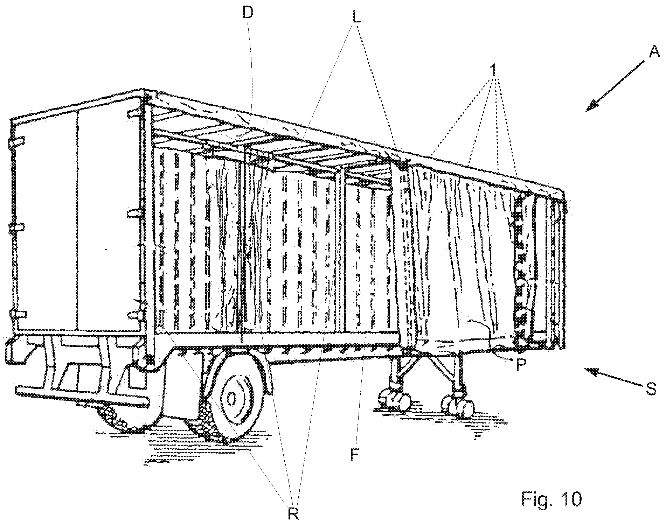

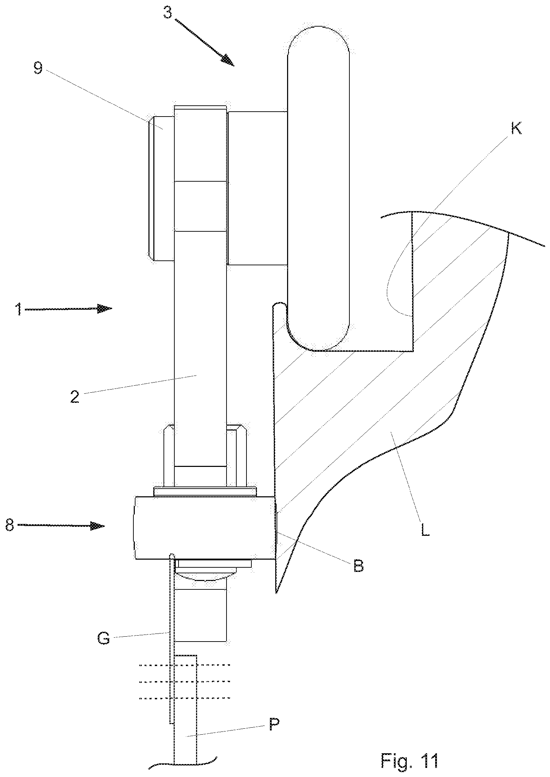

Fig. 10 zeigt eine Ansicht eines Planenaufbaus A, der eine Ladefläche F eines Sattelaufliegers S überbaut. Der Planenaufbau A enthält über Rungen R gegen die Ladefläche F abgestütze Längsträger L, an denen ein Schiebedach D angeschlossen ist. Über Planenaufhängvorrichtungen 1, die in Fig. 10 von einem Teil der Dachplane verdeckt sind und daher nicht sichtbar sind, ist die Seitenplane P an einer Kammer K des Längsträgers L angeschlossen (Fig. 11), die ein Verkippen um die Auflage der Tragrollen 3 auf dem Grund der Kammer K derart zulässt, dass das untere Ende der Planenaufhängvorrichtungen 1 nach außen verschwenkt wird.

Man erkennt in Fig. 11, dass die Führungsrolle 8 gegen eine Führungsbahn B des Längsträgers L anliegt und so sicherstellt, dass auch bei gelöster Plane P die Planenaufhängvorrichtung 1 nicht an dem Längsträger L schleift. Auf diese Weise wird die Plane P auch nicht an dem Längsträger L aufgerieben. Man erkennt ferner den Gurt G, der die Seitenplane P mit der Planenaufhängvorrichtung 1 verbindet. Wird an der Plane P gezogen, um sie auf- oder zuzuziehen, rollen die Tragrollen 3 entlang des Grundes der Kammer K ab, während die Führungsrollen 8 an der nach außen weisenden Begrenzung B des Längsträgers L abrollen.

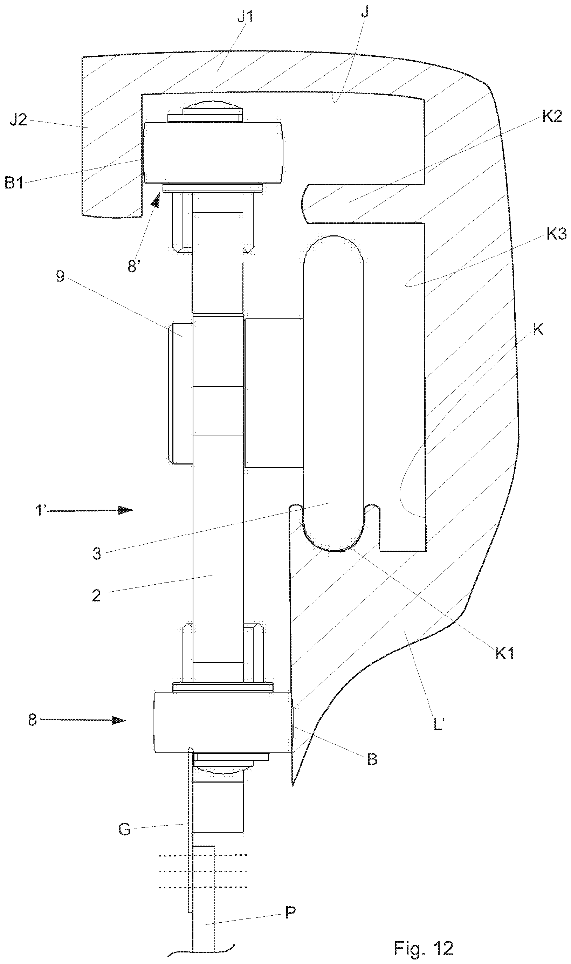

Fig. 12 zeigt ein weiteres Ausführungsbeispiel einer Planenaufhängvorrichtung 1', bei der dieselben Teile bzw. vergleichbare Teile wie bei dem vorhergehenden Ausführungsbeispiel mit denselben Bezugszeichen bezeichnet sind, so dass hier nur auf die Unterschiede eingegangen wird.

Man erkennt, dass der Längsträger 11' eine geänderte Konfiguration aufweist, bei der die Tragrolle 3 in einem in der Kammer K vorgesehenen Spur K1 geführt ist, die die Tragrolle 3 beiderseits abstützt. Die Kammer K weist einen nach außen gerichteten Schenkel K2, der oberhalb der Führungsrolle 3 angeordnet ist und der ein Anheben der Planenaufhängvorrichtung 1' aus der Spur K1 verhindert. Man erkennt, dass die die Spur K1 und den Schenkel k2 verbindende, nach außen gerichtete Fläche K3 der Kammer K einen Abstand zu den Tragrollen 3 aufweist, so dass die Planenaufhängvorrichtung 1' innerhalb der Spur K1 verschwenkt werden kann. Hierzu ist es möglich, die seitlichen Begrenzungen der Spur K1 etwas niedriger auszuführen, um die Schwenkbewegung zu erleichtern, oder auf eine der beiden Begrenzungen zu verzichten, wie dies bei dem Längsträger L aus Fig. 11 der Fall ist.

Der Längsträger L' weist eine weitere Kammer J auf, deren oberer Steg J1 die Planenaufhängvorrichtung 1' überragt und von dem ein nach unten abgefalteter Bereich J2 absteht, der eine weitere Führungsbahn B1 bereitstellt.

An dem oberen Rand der Basisplatte 2 ist vergleichbar der Führungsrolle 8 eine weitere Führungsrolle 8' angeschlossen, wobei jeweils der Führungsrolle 8 gegenüberliegend jeweils eine weitere Führungsrolle 8' vorgesehen ist, wobei der Außenumfang der weiteren Führungsrolle 8' jeweils an der Führungsbahn B1 abrollt. Hierdurch wird eine zusätzliche Abstützung geschaffen, die die Führungsrolle 8 entlastet und daher eine erhöhte Lebensdauer der Planenaufhängvorrichtung 1' gewährleistet. Die weiteren Führungsrollen 8' sind hierbei in gleicher Weise wie die Führungsrollen 8 an die Basisplatte 2 angeschlossen.

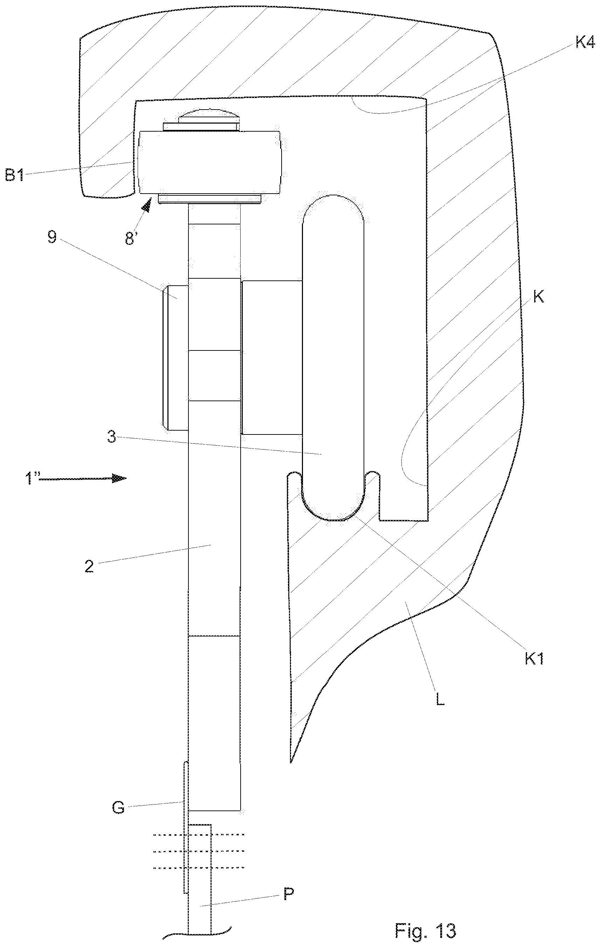

Fig. 13 zeigt ein weiteres Ausführungsbeispiel einer Planenaufhängvorrichtung 1", bei der dieselben Bezugszeichen wie bei dem Ausführungsbeispiel gemäß Fig. 12 dieselben oder strukturell vergleichbare Teile zeigen.

Die Geometrie des Längsträgers L" aus Fig. 13 ist hierbei verändert, da die weitere Führungsrolle 8' und die Tragrolle 3 in derselben Kammer K verlaufen, das heißt der Steg K2 aus Fig. 12 ist weggelassen, so dass insgesamt eine kompaktere, geringere Bauhöhe der Kammer K erreicht wird. Die Tragrolle 3 ist wiederum in einer Spur K1 geführt, während der Außenumfang der Führungsrolle 8' ich an der Führungsbahn B1 der Kammer K abwälzt. Hierbei ist die Höhe der Kammer K so bemessen, dass die Planenaufhängvorrichtung 1" in der Spur K1 verschwenkbar ist, jedoch nicht nach oben ausgehoben werden kann; hierzu ist die Unterseite des Schenkels K4 so niedrig bemessen, dass das obere Ende der Führungsrolle 8' bzw. ihres Lagerzapfens ein Ausheben der Planenaufhängvorrichtung 1" verhindert. Man erkennt, dass die Plane P auch wesentlich näher an den Tragrollen 3 an die Basisplatte 2 angeschlossen werden kann, so dass eine sehr kompakte und platzsparende Planenaufhängvorrichtung 1" geschaffen ist. Da keine Führungsrolle 8 am unteren Rand der Basisplatte 2 angeschlossen ist, sind die Führungsrollen 8' die einzigen Führungsrollen.

Eine weitere Besonderheit des Ausführungsbeispiels gem. Fig. 13 besteht darin, dass die Führungsrolle 8' auf einem von dem Rand der Basisplatte 2 vorstehenden einstückig und einteilig mit der Basisplatte 2 ausgebildeten Zapfen gelagert ist, der vor dem Aufsetzen der eigentlichen Rolle abgerundet wurde. Hierdurch ist es nicht erforderlich, einen gesonderten Bolzen in eine Ausnehmung der Basisplatte 2 einzusetzen oder hineinzutreiben oder zu verschweißen, so dass die Herstellung vereinfacht und die Stabilität der Planenaufhängvorrichtung 1" erhöht ist.

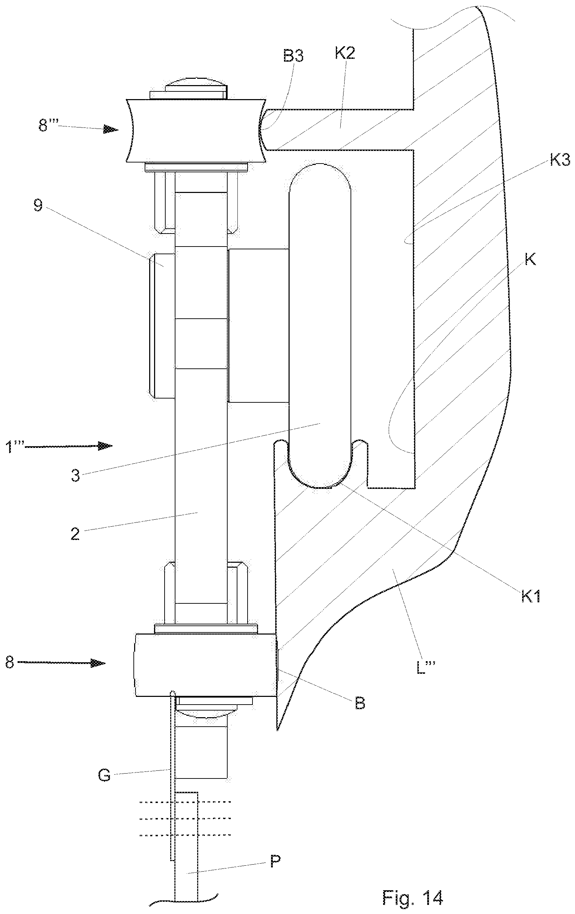

Fig. 14 zeigt ein weiteres Ausführungsbeispiel einer Planenaufhängvorrichtung 1"', die in einem Längsträger L"' verlagerbar ist, bei der dieselben strukturell vergleichbaren Teile wie in Fig. 11 mit denselben Bezugszeichen erläutert werden.

Man erkennt, dass die Planenaufhängvorrichtung 1"' sehr kompakt ausgeführt ist. Die Besonderheit der Planenaufhängvorrichtung 1"' besteht darin, dass die weitere Führungsrolle 8"' einen konkaven Außenumfang wie in Fig. 14 gezeigt aufweist, der es ermöglicht, dass sich die weitere Führungsrolle 8"' an dem nach außen weisenden, eine Führungsbahn B3 bildenden Rand des Schenkels K2 abstützen kann. Hierdurch wird die Führungsrolle 8 entlastet, wobei auch hier die weitere Führungsrolle 8"' jeweils jeder der beiden Führungsrollen 8 gegenüberliegend an der Basisplatte 2 angeschlossen ist.

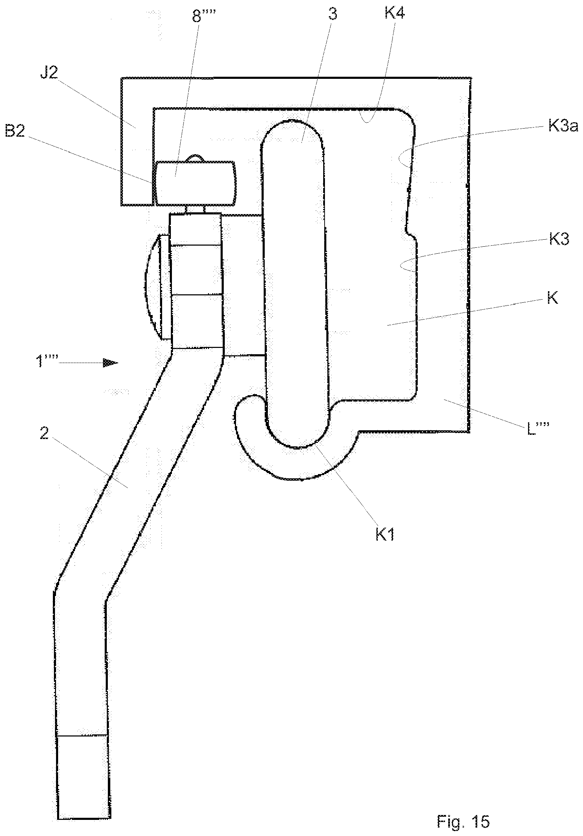

Fig. 15 zeigt ein weiteres Ausführungsbeispiel einer Planenaufhängvorrichtung 1"", bei dem dieselben Bezugszeichen wie in Fig. 13 dieselben oder strukturell vergleichbare Teile beschreiben.

Man erkennt, dass die Führungsrolle 8"" in einem abgewandelten Profil eines Längsträgers L"" geführt ist, der nur eine Kammer K mit einer Spur K1 aufweist, wobei die Basisplatte 2 oberhalb der Ebene des Anschlusses der Tragrollen 3 eine Führungsrolle 8"" aufweist, die in etwa mittig zwischen den beiden Tragrollen 3 angeordnet ist und die recht klein dimensioniert ist, so dass sie so tief angeordnet werden kann, dass sie hinter der Ebene, in der die Tragrollen 3 liegen, über den oberen Rand der Basisplatte 2 vorsteht. Der Umfang der Führungsrolle 8"" rollt sich hierbei gegen die Führungsbahn B2 ab, die an einem Schenkel J2 der Kammer K abrollt.

Man erkennt, dass die Planenaufhängvorrichtung 1"" mit ihren Tragrollen 3 in der Spur K1 gut schwenken kann, wobei die Führungsrolle 8"" durch ihre Anlage an die Führungsbahn B2 ein Herausschwenken der Seitenplane ermöglicht, nicht jedoch ein Einwärtsschwenken der Plane. Man erkennt ferner, dass an der nach außen weisenden Fläche der Kammer K ein Absatz K3a vorgesehen ist, gegen den im Falle des Verschwenkens die Tragrollen 3 anschlagen, so dass der maximale Winkel hierdurch vorteilhaft begrenzt ist. Man erkennt weiterhin, dass der Schenkel K4 ein Ausheben der Planenaufhängvorrichtung 1' verhindert, wobei hier die Tragrollen 3 das Ausheben nach oben unmöglich machen.

Die Besonderheit bei dem Ausführungsbeispiel gem. Fig. 15 besteht darin, dass nur eine Führungsrolle 8"" an der Planenaufhängvorrichtung 1"" angeschlossen ist, da durch die Spur K1 die Tragrollen 3 bereits ein Stückweit seitlich abgestützt sind und daher die auftretenden Momente gering sind.

Die Erfindung ist vorstehend anhand von Ausführungsbeispielen erläutert worden, bei denen die Führungsrolle mit einer gelochten Scheibe 8k aus Kunststoff als Rollenglied bzw. als drehbares Teil der Führungsrolle 8 ausgeführt ist. Es versteht sich, dass auch eine gelochte Scheibe aus Metall vorgesehen sein kann, wobei dann zweckmäßigerweise eine Buchse die Reibeigenschaften an Bolzen 8b und Scheibe 8s verbessert. Eine solche Buchse kann beispielsweise aus Teflon nach Art einer Kragenbuchse geformt sein.

Die Erfindung ist vorstehend anhand eines Ausführungsbeispiels erläutert worden, bei dem die Basisplatte aus Stahl hergestellt ist. Es versteht sich, dass die Basisplatte auch aus anderen Legierungen oder Materialien hergestellt sein kann, insbesondere aus Kunststoff oder einem Metall-Kunstoff-Verbund. Wird die Basisplatte aus einem Kunststoff geformt, der auch glasfaser- oder aramidfaserverstärkt sein kann, ist es leicht möglich, ohne spanende Bearbeitung die Nuten 2n vorzusehen, in die der Lagerzapfen 8z der Rolle 8 eingearbeitet wird. Ebenso ist es dann möglich, den Lagerzapfen 8z bereits einstückig mit der Basisplatte2 herzustellen, so dass nur noch die Lochscheibe 8k aufgebracht und gesichert werden muss. Es ist sogar möglich, die Lochscheibe 8k bereits einstückig mit der Herstellung aus Kunststoff herzustellen.

Die Erfindung ist vorstehend anhand eines Ausführungsbeispiels erläutert worden, bei dem die Führungsrollen 8 in einer senkrechten Ebene zu den Tragrollen 3 und in einer senkrechten Ebene zu der Erstreckung der Basisplatte 2, zumindest aber ihres oberen Abschnitts 2o, angeordnet sind. Es versteht sich, dass die Führungsrollen 8 auch einen Winkel hierzu einnehmen können, um die elastische Deformation insbesondere beim Öffnen und Schließen der Plane P auszugleichen.

Die Erfindung ist vorstehend anhand eines Ausführungsbeispiels erläutert worden, bei dem in beiden Ecken 2e der Basisplatte 2 jeweils eine Führungsrolle 8 vorgesehen ist. Es versteht sich, dass an der Basisplatte 2 auch nur eine Führungsrolle 8 vorgesehen sein kann, oder aber dass nur in einer der beiden Ecken 2e eine Führungsrolle 8 angeordnet sein kann. Ferner ist es möglich, neben den zwei Führungsrollen 8 noch weitere Führungsrollen vorzusehen, wenn beispielsweise weitere Führungsflächen des Längsträgers L eine Abstützung ermöglichen.

Die Erfindung ist vorstehend anhand eines Ausführungsbeispiels erläutert worden, bei dem der Lagerzapfen 8z der Führungsrolle 8 einseitig in einer Nut 2n der Basisplatte 2 gelagert ist. Es versteht sich, dass es auch möglich ist, die Führungsrolle 8 beidseitig zu lagern, indem nämlich der Bolzen 8b verlängert und in einem gegenüberliegenden Bereich der Basisplatte 2 festgelegt ist. In diesem Fall lässt sich jedoch die Kunstofflochscheibe 8k nicht ohne Weiteres austauschen.

Die Erfindung ist vorstehend anhand von Ausführungsbeispielen erläutert worden, bei denen der Umfang der Kunststofflochscheibe 8 nicht über die stirnseitige Begrenzung der Basisplatte 2 in Verlagerungsrichtung vorsteht, so dass bei zusammengeschobener und in Falten gelegter Seitenplane P die metallischen Stirnseiten der Basisplatte 2 die Zug- bzw. Schubkräfte der Planenaufhängvorrichtung 1, 1' gegenseitig übertragen. Es ist aber möglich, dass die Führungsrolle 8 nicht nur die beiden Flachseiten 2v, 2h der Basisplatte 2 überragt, sondern auch stirnseitig über den Rand der Basisplatte 2 vorsteht.

Die Erfindung ist vorstehend anhand eines Ausführungsbeispiels erläutert worden, bei dem die Führungsrollen 8 in etwa fluchtend mit der Erstreckung des Langlochs 4 angeordnet sind. Die genaue Positionierung der Ebene der Führungsrollen 8 bzw. der Kunststofflochscheibe 8k ergibt sich aus der Position der zugehörigen Führungsfläche an dem Längsträger L. Es ist möglich, die Führungsrollen 8 auch weiter unten, bezogen auf das Langloch 4, anzuordnen, also auch unterhalb des Langlochs 4 oder aber unterhalb der dann nicht oder nicht vollständig ausgesparten Ecke 2e.

Die Erfindung ist vorstehend anhand eines Ausführungsbeispiels erläutert worden, bei dem die Lagerachse 8b der Führungsrollen 8 jeweils weiter außen an der Basisplatte 2 angeordnet ist als der äußerste Punkt der Tragrollen 3, der durch den maximalen Radius des Laufrings 3k aus Kunststoff definiert ist. Es versteht sich, dass die Führungsrollen 8 auch unterhalb der Tragrollen 3 angeordnet sein können.

Die Erfindung ist vorstehend anhand von Ausführungsbeispielen erläutert worden, bei denen bezüglich der Ebene E eine Spiegelsymmetrie besteht. Es versteht sich, dass die Planenaufhängvorrichtung auch als asymmetrisches Teil ausgeführt sein kann.

Die Erfindung ist vorstehend anhand von Ausführungsbeispielen erläutert worden, bei denen die Tragrollen an die Basisplatte angeschraubt sind. Es versteht sich, dass die Tragrollen auch auf andere Art und Weise an die Basisplatte 2 angeschlossen bzw. angeschraubt sein können, insbesondere aber auch vernietet.

Die Erfindung ist vorstehend anhand von Ausführungsbeispielen erläutert worden, bei denen die Führungsrolle 8 in eine Nut 2n der Basisplatte eingesetzt wird. Es versteht sich, dass die Führungsrolle 8 auch an einem Vorsprung, der von dem unteren Rand oder der unteren Schmalseite 2s der Basisplatte 2 absteht, angeordnet sein kann, wenn der vorstehende Abschnitt ausreichend verrundet ist, um die Kunststofflochscheibe 8k drehbar zu lagern. Alternativ kann statt des Verrundens ein rundes Lager mit polygonalem Loch auf den vorstehenden Abschnitt angebracht werden. Ferner ist es möglich, anstelle der Nut 2n eine Bohrung in der Schmalseite 2s vorzusehen, in die ein Bolzen eingesetzt wird, der entweder den Lagerzapfen 8b bildet oder aber eine drehbare Bewegung in der Bohrung ermöglicht, wodurch die Rolle 8k bezüglich der Basisplatte 2 drehbar aufgenommen ist.

Die Erfindung ist vorstehend anhand von Ausführungsbeispielen beschrieben worden, bei denen die der die Führungsrolle lagernde Zapfen im Wesentlichen in der Ebene bzw. in Verlängerung der Basisplatte 2 angeordnet ist. Es versteht sich, dass der Lagerzapfen auch gegenüber der Ebene der Basisplatte einen Winkel einschließen kann. Insbesondere kann der Winkel auch bis zu 135° und insbesondere 90° betragen. Ist der Lagerzapfen aus der Basisplatte 2 selbst ausgebildet, kann dieser - auch vor oder nach dem Abrunden - abgebogen werden. Damit ist es z.B. auch möglich, einen Zapfen aus der Basisplatte freizustanzen und dann senkrecht abzukanten, mit der Folge, dass an diesem Zapfen die Tragrollen 3 angeschlossen werden können.

## Patentansprüche

1. Planenaufhängvorrichtung mit einer Basisplatte (2), wobei an der Basisplatte (2) wenigstens eine Anschlusseinrichtung (4) für eine Plane (P) und wenigstens zwei Tragrollen (3) angeordnet sind, die entlang eines Längsträgers (L) eines Verdeckgestells für einen Planenaufbau verlagerbar sind,
wobei die Basisplatte (2) zumindest eine zu den Tragrollen (3) senkrechte Führungsrolle (8) aufweist,
**dadurch gekennzeichnet,**
**dass** die Führungsrolle (8) an einer einen Rand bildenden Schmalseite (2s) der Basisplatte (2) gelagert ist.

2. Planenaufhängvorrichtung nach Anspruch 1, **dadurch gekennzeichnet, dass** die zumindest eine Führungsrolle (8) einseitig in der Schmalseite (2s) der Basisplatte (2) oder beidseitig in der Schmalseite (2s) der Basisplatte (2) gelagert ist.

3. Planenaufhängvorrichtung nach einem der vorhergehenden Ansprüche, **dadurch gekennzeichnet, dass** die zumindest eine Führungsrolle (8) an der den Tragrollen (3) gegenüberliegenden Schmalseite (2s) der Basisplatte (2) gelagert ist.

4. Planenaufhängvorrichtung nach einem der vorhergehenden Ansprüche, **dadurch gekennzeichnet, dass** die zumindest eine Führungsrolle (8) beiderseits der Basisplatte (2) radial vorsteht.

5. Planenaufhängvorrichtung nach einem der vorhergehenden Ansprüche, **dadurch gekennzeichnet, dass** die zumindest eine Führungsrolle (8) benachbart zu der Anschlusseinrichtung (4) angeordnet ist.

6. Pianenaufhängvorrichtung nach einem der vorhergehenden Ansprüche, **dadurch gekennzeichnet, dass** die zumindest eine Führungsrolle (8) in dem nach unten weisenden Rand der Basisplatte (2) gelagert ist.

7. Planenaufhängvorrichtung nach einem der vorhergehenden Ansprüche, **dadurch gekennzeichnet, dass** die zumindest eine Führungsrolle (8) senkrecht zu der Ebene der Tragrollen (3) angeordnet ist, und dass die zumindest eine Führungsrolle (8) senkrecht zu der Ebene der Basisplatte (2) angeordnet ist.

8. Planenaufhängvorrichtung nach einem der vorhergehenden Ansprüche, **dadurch gekennzeichnet, dass** die Basisplatte (2) eine Aussparung (2e) aufweist, in der eine der Führungsrollen (8) angeordnet ist.

9. Planenaufhängvorrichtung nach Anspruch 8, **dadurch gekennzeichnet, dass** die Aussparung (2e) in einer Ecke der Basisplatte (2) vorgesehen ist.

10. Planenaufhängvorrichtung nach einem der vorhergehenden Ansprüche, **dadurch gekennzeichnet, dass** die zumindest eine Führungsrolle (8) auf einem Lagerzapfen (8z) gelagert ist, der einteilig mit der Basisplatte (2) ausgebildet oder an der Basisplatte (2) festgelegt ist.

11. Planenaufhängvorrichtung nach einem der vorhergehenden Ansprüche, **dadurch gekennzeichnet, dass** zwei Führungsrollen (8) an der Basisplatte (2) angeordnet sind.

12. Planenaufhängvorrichtung nach einem der vorhergehenden Ansprüche, **dadurch gekennzeichnet, dass** der Abstand der Trag rolle (8) von der Basisplatte (2) größer ist als der Radius der zumindest einen Führungsrolle.

13. Planenaufhängvorrichtung nach einem der vorhergehenden Ansprüche, **dadurch gekennzeichnet, dass** die Tragrollen (3) über ein Wälzlager (3w) mit einem inneren Lagerring (3i) und einem äußeren Lagerring (3a) an die Basisplatte (2) angeschlossen sind, und dass der innere Lagerring (3a) einen den äußeren Lagerring (3i) axial überragenden Hohlzylinderabschnitt aufweist, der einen Distanzabschnitt zu der Basisplatte (2) bildet.

14. Seitenplane eines Nutzfahrzeugaufbaus, umfassend ein Planenmaterial, einen Gurt und wenigstens eine Planenaufhängvorrichtung (1; 1') nach einem der Ansprüche 1 bis 13, wobei der Gurt durch die Anschlusseinrichtung (4) hindurchgeführt und an das Planenmaterial angeschlossen ist.

15. Planenaufbau mit einem Verdeckgestell, das einen oberen Längsträger (L) aufweist, an dem wenigstens eine Planenaufhängvorrichtung (1; 1') angeschlossen ist, wobei die Planenaufhängvorrichtung (1; 1') eine Basisplatte (2) umfasst, an der wenigstens eine Anschlusseinrichtung (4) für eine Plane (P) und wenigstens zwei Tragrollen (3), die entlang des Längsträgers (L) verlagerbar sind, angeordnet sind,
**dadurch gekennzeichnet,**
**dass** die Planenaufhängvorrichtung (1; 1') nach einem der Ansprüche 1 bis 13 ausgebildet ist.

## Claims

1. A tarpaulin suspension device having a base plate (2) on which at least one connection device (4) for a tarpaulin (P) and at least two support rollers (3) are disposed, which rollers can be displaced along a longitudinal carrier (L) of a cover frame for a tarpaulin structure, wherein the base plate (2) comprises at least one guide roller (8) perpendicular to the support rollers (3),
**characterized in**
**that** the guide roller (8) is mounted on a narrow side (2s) forming an edge of the base plate (2).

2. The tarpaulin suspension device according to claim 1, **characterized in that** the at least one guide roller (8) is mounted on one side in the narrow side (2s) of the base plate (2) or on both sides in the narrow side (2s) of the base plate (2).

3. The tarpaulin suspension device according to one of the preceding claims, **characterized in that** the at least one guide roller (8) is mounted on the narrow side (2s) of the base plate (2) that lies opposite the support rollers (3).

4. The tarpaulin suspension device according to one of the preceding claims, **characterized in that** the at least one guide roller (8) projects radially on both sides of the base plate (2).

5. The tarpaulin suspension device according to one of the preceding claims, **characterized in that** the at least one guide roller (8) is disposed adjacent to the connection device (4).

6. The tarpaulin suspension device according to one of the preceding claims, **characterized in that** the at least one guide roller (8) is mounted in the downward-facing edge of the base plate (2).

7. The tarpaulin suspension device according to one of the preceding claims, **characterized in that** the at least one guide roller (8) is disposed perpendicular to the plane of the support rollers (3), and that the at least one guide roller (8) is disposed perpendicular to the plane of the base plate (2).

8. The tarpaulin suspension device according to one of the preceding claims, **characterized in that** the base plate (2) has a recess (2e) in which one of the guide rollers (8) is disposed.

9. The tarpaulin suspension device according to claim 8, **characterized in that** the recess (2e) is provided in a corner of the base plate (2).

10. The tarpaulin suspension device according to one of the preceding claims, **characterized in that** the at least one guide roller (8) is mounted on a bearing journal (8z), which is configured in one piece with the base plate (2) or is fixed in place on the base plate (2).

11. The tarpaulin suspension device according to one of the preceding claims, **characterized in that** two guide rollers (8) are disposed on the base plate (2).

12. The tarpaulin suspension device according to one of the preceding claims, **characterized in that** the distance of the support roller from the base plate (2) is greater than the radius of the at least one guide roller (8).

13. The tarpaulin suspension device according to one of the preceding claims, **characterized in that** the support rollers (3) are connected with the base plate (2) by way of a roller bearing (3w) having an inner bearing ring (3i) and an outer bearing ring (3a), and that the inner bearing ring (3i) has a hollow-cylindrical section that projects axially beyond the outer bearing ring (3a), which section forms a spacer section relative to the base plate (2).

14. A side tarpaulin of a utility vehicle structure, comprising a tarpaulin material, a belt and at least one tarpaulin suspension device (1; 1') according to one of claims 1 to 13, wherein the belt is passed through the connection device (4) and connected with the tarpaulin material.

15. A tarpaulin structure having a cover frame, which has an upper longitudinal carrier (L), to which at least one tarpaulin suspension device (1; 1') is attached, wherein the tarpaulin suspension device (1; 1') comprises a base plate (2) on which at least one connection device (4) for a tarpaulin (P) and at least two support rollers (3), which can be displaced along the longitudinal carrier (L), are disposed,
**characterized in**
**that** the tarpaulin suspension device (1; 1') is configured according to one of claims 1 to 13.

## Revendications

1. Dispositif de suspension de bâche avec une plaque de base (2), dans lequel sont disposés sur la plaque de base (2) au moins un dispositif de liaison (4) pour une bâche (P) et au moins deux rouleaux support (3), lesquels rouleaux support (3) peuvent être déplacés le long d'une poutre longitudinale (L) d'un cadre de bâche pour une structure de bâche, dans lequel la plaque de base (2) a au moins un rouleau de guidage (8) qui est perpendiculaire aux rouleaux support (3),
**caractérisé en ce**
**que** le rouleau de guidage (8) est monté sur un petit côté (2s), formant un bord de la plaque de base (2).

2. Dispositif de suspension de bâche selon la revendication 1, **caractérisé en ce que** le au moins un rouleau de guidage (8) est monté sur un côté dans le petit côté (2s) de la plaque de base (2) ou sur les deux côtés dans le petit côté (2s).

3. Dispositif de suspension de bâche selon l'une des revendications précédentes, **caractérisé en ce que** le au moins un rouleau de guidage (8) est monté sur le petit côté (2s) de la plaque de base (2) à l'opposé des rouleaux support (3).

4. Dispositif de suspension de bâche selon l'une des revendications précédentes, **caractérisé en ce que** le au moins un rouleau de guidage (8) fait saillie radialement de part et d'autre de la plaque de base (2).

5. Dispositif de suspension de bâche selon l'une des revendications précédentes, **caractérisé en ce que** le au moins un rouleau de guidage (8) est disposé de manière adjacente au dispositif de liaison (4).

6. Dispositif de suspension de bâche selon l'une des revendications précédentes, **caractérisé en ce que** le au moins un rouleau de guidage (8) est monté sur le bord orienté vers le bas de la plaque de base (2).

7. Dispositif de suspension de bâche selon l'une des revendications précédentes, **caractérisé en ce que** le au moins un rouleau de guidage (8) est disposé perpendiculairement au plan des rouleaux support (3), et **en ce que** le au moins un rouleau de guidage (8) est disposé perpendiculairement au plan de la plaque de base (2).

8. Dispositif de suspension de bâche selon l'une quelconque des revendications précédentes, **caractérisé en ce que** la plaque de base (2) comporte un évidement (2e) dans lequel est disposé l'un des rouleaux de guidage (8).

9. Dispositif de suspension de bâche selon la revendication 8, **caractérisé en ce que** l'évidement (2e) est prévu dans un angle de la plaque de base (2).

10. Dispositif de suspension de bâche selon l'une quelconque des revendications précédentes, **caractérisé en ce que** le au moins un rouleau de guidage (8) est monté sur un axe de palier (8z) qui est formé d'un seul tenant avec la plaque de base (2) ou est fixé à la plaque de base (2).

11. Dispositif de suspension de bâche selon l'une des revendications précédentes, **caractérisé en ce que** deux rouleaux de guidage (8) sont disposés sur la plaque de base (2).

12. Dispositif de suspension de bâche selon l'une des revendications précédentes, **caractérisé en ce que** la distance du rouleau de guidage (8) à la plaque de base (2) est supérieure au rayon du au moins un rouleau de guidage.

13. Dispositif de suspension de bâche selon l'une des revendications précédentes, **caractérisé en ce que** les rouleaux support (3) sont reliés à la plaque de base (2) par l'intermédiaire d'un palier à roulement (3w) comportant une bague de roulement intérieure (3i) et une bague de roulement extérieure (3a), et **en ce que** la bague de roulement intérieure (3i) comporte une partie cylindrique creuse faisant saillie axialement au-delà de la bague de roulement extérieure (3a) et formant une partie d'écartement par rapport à la plaque de base (2).

14. Bâche latérale d'une caisse de véhicule utilitaire, comprenant un matériau de bâche, une ceinture et au moins un dispositif de suspension de bâche (1 ; 1') selon l'une des revendications 1 à 13, dans laquelle la ceinture est passée à travers le dispositif de liaison (4) et est fixée au matériau de bâche.

15. Structure de bâche comprenant un cadre de bâche ayant une poutre longitudinale supérieure (L) à laquelle au moins un dispositif de suspension de bâche (1 ; 1') est fixé, ledit dispositif de suspension de bâche (1 ; 1') comprenant une plaque de base (2) sur laquelle sont disposés au moins un dispositif de liaison (4) pour une bâche (P) et au moins deux rouleaux support (3) déplaçables le long de ladite poutre longitudinale (L),
**caractérisée en ce**
**que** le dispositif de suspension de bâche (1 ; 1') est conçu selon l'une des revendications 1 à 13.
